# FASCICULE DE BREVET EUROPEEN

(11) **EP 2 297 058 B1**
(45) Date de publication et mention de la délivrance du brevet: **28.03.2012**
(21) Numéro de dépôt: 09793948.2
(22) Date de dépôt: 08.07.2009
(51) Int. Cl.: C04B 2/02, C04B 2/12

(54) **MÉTHODE DE CONDUITE DES FOURS DROITS DE TYPE RÉGÉNÉRATIF POUR LA PRODUCTION DE CHAUX**
VERFAHREN ZUM BETRIEB EINES REGENERATIVEN SCHACHTOFENS ZUR HERSTELLUNG VON KALK
METHOD FOR OPERATING A REGENERATIVE SHAFT FURNACE FOR PRODUCING LIME

(30) Priorité: 10.07.2008 BE 200800382
(43) Date de publication de la demande: 23.03.2011
(73) Titulaire: Carmeuse Research And Technology, 1348 Louvain-La-Neuve (BE)
(72) Inventeur: THIBEAUMONT, Etienne, B-1348 Louvain-La-Nueve (BE); BOONE, Benoit, B-1348 Louvain-La-Neuve (BE); TILQUIN, Jean-Yves, B-1348 Louvain-La-Neuve (BE)
(74) Mandataire: Vandeberg, Marie-Paule L.G.
(86) Numéro de dépôt international: PCT/EP2009/058664
(87) Numéro de publication internationale: WO 2010/003978

(56) Documents cités:
- WO-A-2004/089842
- US-A- 3 617 583
- US-A- 3 633 894
- US-A- 5 380 505

## Description

### Domaine de l'invention

La présente invention concerne une méthode de conduite des fours droits de type régénératif utilisés dans la production de chaux. Cette méthode de conduite des fours permet d'utiliser des matières premières et/ou des combustibles contenant du soufre pour des applications exigeant de faibles teneurs en soufre dans la chaux produite.

### Description de l'art antérieur

La production de chaux vive (CaO) par décarbonatation de calcaire est bien connue depuis l'antiquité mais c'est au cours du vingtième siècle que les technologies de fours ont fortement évolué. La production de chaux par des technologies de type « intermittentes» a progressivement évolué vers des fours continus.

Des systèmes de fours verticaux à simple cuve et des fours rotatifs avec et sans préchauffage on été progressivement développés. Ces technologies ont révolutionné le mode de production de la chaux ; néanmoins les performances énergétiques de ces fours sont restées limitées.

Les développements de fours droits de type régénératif à deux ou plus de deux cuves ont été décrits dans le brevet Autrichien 211, 214 et l'article dans le journal Zement Kalk and Gips n°6, 1980 p217. Ces fours ont la particularité de produire une chaux de bonne qualité avec une consommation spécifique faible. La consommation spécifique est la quantité de chaleur utilisée pour produire un kg de chaux.

Le brevet US 4,382,779 décrit une amélioration de ces fours afin de limiter la recarbonatation de la chaux dans le four.

Le problème de la réduction du soufre dans la chaux produite a déjà fait l'objet de nombreux dépôts de brevet pour d'autres types de four à chaux.

Le brevet américain US 3,499,636 décrit l'utilisation d'un four rotatif limitant la teneur en oxygène dans la zone de déchargement afin de réduire la teneur en soufre contenu dans la chaux.

Le brevet américain US 3,633,894 décrit une méthode pour réduire le soufre dans la chaux dans un four annulaire.

Le brevet américain 3,617,583 décrit la calcination du calcaire dans un four à lit fluidisé où le soufre provenant du fuel serait majoritairement extraite des fumées.

Le brevet américain US 5,380,505 décrit un procédé de production de chaux à basse teneur en soufre grâce à un système de four rotatif et l'addition de fines particules de chaux hydratée.

La demande PCT WO 2004/089842 décrit un système de conduite des fours rotatifs avec préchauffeur pour limiter la teneur en soufre dans la chaux.

Cependant, aucun de ces documents ne propose une méthode de production de chaux vive à partir de calcaire dans un four droit régénératif en continu, au départ de conditions standard d'utilisation et avec des matières premières et des combustibles courants, tout en réduisant les problèmes liés à la présence de composés de soufre.

### Description de l'invention

Certains types de calcaire et d'énergie fossile utilisés pour les fours à chaux contiennent naturellement du soufre.

Il y a différents types d'énergies fossiles utilisables pour les fours à chaux. Généralement leurs prix varient en fonction notamment de leur teneur en soufre.

A titre d'exemple, si l'on prend la teneur en soufre de certaines énergies fossile en Europe de l'Ouest à la fin du premier trimestre 2007 comme le gaz naturel (0,0% en poids), la lignite (0,35%), le charbon (2,6%) et le coke de pétrole (5,0%), on verra que le coût en Euro par GigaJoule produit se présente précisément dans l'ordre inverse : coke de pétrole (2,87 Euro par GJ), charbon (2,96), lignite (3,32) et gaz naturel (4,95). On remarque que les énergies fossiles les moins chères sont celles qui contiennent le plus de-soufre.

Compte tenu que le soufre est généralement capté en grande partie par la chaux et que certaines applications requièrent une chaux contenant une quantité limitée de soufre, l'utilisation de combustible fossile à haute teneur en soufre est proscrite.

Une autre source de soufre est bien entendu le calcaire utilisé pour produire la chaux : ce calcaire est par exemple plus ou moins riche en pyrite.

Typiquement pour une utilisation en sidérurgie les teneurs maximum de soufre dans la chaux sont limitées à 0,1% en poids, voire souvent à 0,03%.

Le but de cette invention est donc de proposer une méthode permettant d'utiliser des calcaires et des combustibles fossiles contenant du soufre, tout en réduisant les problèmes liés à la présence de soufre.

En se basant sur les principes généraux de thermodynamique, on peut décrire l'équilibre entre l'oxyde de calcium (CaO), l'oxygène (02) et le dioxyde de soufre (S02) de la façon suivante :

CaO + ½ O2 + SO2 ↔ CaSO4

Cette réaction progresse dans un sens ou dans l'autre en fonction des variables telles que l'excès d'air de combustion et la température dans les différentes zones du procédé.

Si la température diminue et/ou la teneur en oxygène augmente, le soufre est capturé par l'oxyde de calcium.

Si la température augmente et/ou la teneur en oxygène diminue, le soufre est « extrait » de l'oxyde de calcium et se trouve ainsi sous forme gazeuse.

De plus, sur base du même principe d'équilibre, on peut mettre en évidence d'autres réactions entre ces mêmes composés, notamment dans le cas ou nous nous trouvons en présence de monoxyde de carbone ou CO (soit en atmosphère réductrice). Dans ce cas, la réaction suivante a lieu et est également fortement dépendante de variables du procédé :

CaO + S02 + 3CO ↔ CaS + 3CO2

Si la température diminue et/ou la teneur en CO augmente, le soufre est « fixé » par l'oxyde de calcium.

Si la température augmente et/ou la teneur en CO diminue (tout en conservant une atmosphère réductrice); le soufre est oxydé à nouveau et se trouve sous forme gazeuse.

En dehors des aspects thermodynamiques, il convient aussi d'examiner le four utilisé.

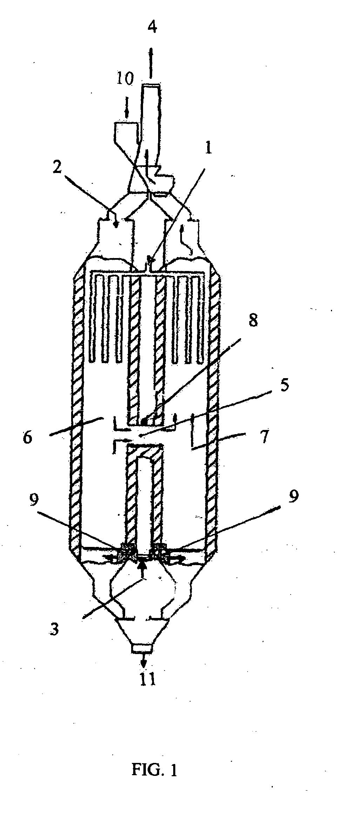

Le four de type régénératif est représenté à la Figure 1. Ce type de four consiste en deux cuves (circulaires ou rectangulaires) (6) et (7) interconnectées en leur partie centrale par un carneau de liaison (5).

Les cuves sont chargées en leur sommet (10) à intervalle régulier avec du carbonate de calcium (et/ou de magnésium) en pierres. Le produit final CaO est déchargé de façon régulière à la base des cuves (11).

Le combustible arrive par l'entrée (1), l'air de combustion par l'entrée (2), tandis que l'air de refroidissement arrive en (3). Les gaz quittent le four par la sortie (4). Les deux modifications notables sont la mise en place d'appareils permettant la mesure (8) en température et en composition des gaz au niveau du carneau, ainsi que la pose de clapet automatiques (9) sur l'arrivée d'air de refroidissement.

Le carbonate introduit traverse successivement les zones de préchauffage (jusqu'au bout des lances injectant le combustible), de décarbonatation (du bout des lances jusqu'à hauteur du carneau de liaison entre les deux cuves), et de refroidissement (du carneau jusqu'au dispositif de déchargement de la chaux).

La marche du four est scindée en deux périodes de durée égale d'environ 8 à 15 minutes.

Pendant la première période, le combustible est injecté au travers des lances de la cuve n°1 et entre en combustion grâce à l'air de combustion injecté en partie supérieure de cette cuve.
L'énergie dégagée est utilisée pour décarbonater les pierres présentes dans la cuve n°1. Une quantité supplémentaire d'air est injectée à la base de chaque cuve afin de refroidir l'oxyde de calcium produit.

L'air de refroidissement injecté à la base de la cuve n°1 ainsi que les gaz provenant de la combustion dans la cuve 1 se rejoignent et traversent le carneau de liaison. Ils se mélangent ensuite avec l'air de refroidissement injecté à la base de la cuve n°2 avant de traverser toute la hauteur de produit se trouvant dans la cuve n°2.
Ce faisant, les pierres présentent en partie haute de la cuve n°2 « capturent » la majorité de l'énergie présente dans ce mélange gazeux. Si ce procédé se poursuit de cette façon, la température des gaz s'échappant à la cheminée dépasseraient largement les 500°C.

C'est pourquoi, après 8 à 15 minutes, la seconde période débute.
L'injection de combustible et d'air de combustion dans la cuve n°1 sont interrompus. Une charge de pierres est injectée dans la/les cuve(s). Ensuite, le combustible et l'air de combustion sont injectés dans la cuve n°2 alors que les gaz de combustion ainsi que l'air de refroidissement sont évacués au travers de la cuve n°1.

Le principe de fonctionnement décrit ci-dessus tient compte des aspects suivants :
- Le lit de pierres présentes dans la partie de préchauffage de chaque cuve agit comme un échangeur de chaleur « à régénération ». L'énergie en excès contenue dans les gaz provenant de la cuve en combustion est transférée aux pierres se trouvant dans la zone de préchauffage de la cuve n°2 lors de la première étape. Une partie de cette chaleur est ensuite transférée des pierres vers l'air de combustion. Cet air de combustion atteint des températures proches de 800°C.
- La décarbonatation de la chaux est terminée à hauteur du carneau de liaison à une température relativement modérée de 1100°C. Ces conditions favorisent la production de chaux fortement réactive. Le produit final peut, si besoin, être produit avec une teneur en CaCO3 résiduel relativement basse.

Un four standard pourra être alimenté avec un calibre de pierres allant de 25 à 130mm. Habituellement le rapport entre les dimensions des plus petites et des plus grosses est maintenu proche de 2 (calibre allant de 40 à 80 mm par exemple). La consommation spécifique d'un four de ce type est de l'ordre de 3678 KJ/kg chaux produite.

En vue d'appliquer la méthode de la présente invention, le four sera équipé d'un analyseur de gaz mesurant les gaz se trouvant dans le carneau de liaison et des thermocouples et/ou pyromètres optiques installés dans le carneau de liaison afin d'en mesurer la température.

De plus, la chaux extraite du four est analysée de façon régulière afin d'en mesurer la teneur en CaCO3 résiduelle et la teneur en soufre, qui resteront bien entendu dans les tolérances de production.

La conduite du four est fortement basée sur les valeurs de ces trois groupes de mesures. D'une façon globale, on peut dire que le soufre est mobilisé sous forme gazeuse à un ou plusieurs endroits spécifiques du four grâce à un suivi précis des informations précédentes et en agissant sur :
- la consommation spécifique (kJ/kg de chaux produite) ;
- l'excès d'air de combustion ;
- la répartition de l'air de refroidissement entre la cuve en combustion et la cuve en préchauffage.

En vue d'appliquer la méthode de la présente invention, on effectuera une première étape au départ d'un four fonctionnant dans des conditions standard. Par conditions standard, on désigne les conditions normales pour la conduite d'un tel four, eu égard notamment aux différentes températures, l'excès d'air de combustion, l'air de refroidissement, la consommation spécifique, etc.

Au cours de cette première étape, le débit d'air de combustion est diminué progressivement d'au moins 10% par rapport aux conditions standard d'air de combustion, sachant qu'une valeur normale pour ce type de four est de 100 à 130% des besoins stoechiométriques. La diminution d'au moins 10% se calcule en valeur relative.

Ainsi, si le four fonctionne de façon standard avec un excès d'air de combustion de 130% des besoins stoechiométriques, au cours de la première étape, il conviendra de descendre progressivement en dessous de 117% d'excès d'air de combustion.

De la même façon et toujours à titre d'exemple, en partant de 120% d'excès d'air de combustion en conditions standard, il faudra descendre progressivement en dessous de 108% d'excès d'air de combustion. Et en partant de 110% d'excès d'air en conditions standard, il faudra descendre progressivement en dessous de 99% des besoins stoechiométriques.

Les mesures de l'analyseur de gaz CO, 02 et SO2 mesurant les valeurs au niveau du carneau de liaison sont attentivement suivies.

On arrête la diminution du débit d'excès d'air de combustion lorsque l'on détecte la présence du phénomène de postcombustion dans le carneau. Celui-ci est caractérisé par une forte teneur en CO et accessoirement par une augmentation significative de la température au niveau du carneau de liaison. Ce phénomène mène le four vers une situation de déséquilibre difficile à gérer.

On notera à ce moment une concentration en SO2 au niveau du carneau de liaison entre les cuves.

La première étape décrite ci-dessus peut être suivie par une deuxième étape facultative si la température du carneau n'a pas encore atteint les valeurs maximales autorisées dans le four. Cette deuxième étape consiste à augmenter progressivement la température du carneau de liaison jusqu'à au moins 1050°C. Cette limite dépend cependant des caractéristiques du revêtement réfractaire installé dans le carneau. Cette hausse de température est obtenue en augmentant la consommation spécifique du four (kJ/kg de chaux produite). Une alternative possible consiste à augmenter cette température jusqu'à 1100°C, si cela ne conduit pas à endommager le revêtement du four.

On notera durant cette deuxième étape le maintien d'une concentration élevée en SO2 au niveau du carneau de liaison entre les cuves.

Une troisième étape pouvant intervenir après la première (si la température est déjà un facteur limitatif) ou après la deuxième, consiste à diminuer la quantité d'air de refroidissement injecté dans le bas de la cuve où l'on réalise la combustion. Cette façon de faire va favoriser la « vaporisation » du soufre sous forme gazeuse en conservant une faible teneur en oxygène dans les gaz se trouvant dans le cameau.

Le débit est ainsi diminué progressivement jusqu'à ce que la température de la chaux ne dépasse pas 150°C. Il est important de signaler que la diminution de débit dans la cuve en combustion est compensée par une augmentation du débit dans la cuve en préchauffage. De cette façon, nous conservons un rapport air exprimé en Nm³/kg de chaux produite proche de 0,65.

Les ajustements décrits dans cette troisième étape conduisent à maintenir une concentration élevée en SO2 au niveau du cameau.

La présente invention concerne donc une méthode de production de chaux vive à partir de calcaire dans un four droit régénératif en continu. Cette méthode est caractérisée en ce que, au départ de conditions standard d'excès d'air de combustion pour la conduite de ce four, elle comporte une étape où l'excès d'air de combustion est réduit progressivement jusqu'au moment où une teneur supérieure à 1000 ppm (en volume) en monoxyde de carbone est atteinte au niveau du carneau de liaison entre les cuves.

A la suite de la première étape, cette méthode peut comporter une deuxième étape où la température du four est progressivement augmentée, jusqu'au moment où la température atteint au moins 1050°C au niveau du cameau.

Directement à la suite de la première étape ou à la suite de la seconde étape, cette méthode peut comporter une étape subséquente où le volume d'air de refroidissement de la cuve en combustion est réduit progressivement, jusqu'au moment où la température de la chaux produite ne dépasse pas 150°C.

Les conditions standard d'excès d'air de combustion pour la conduite de ce four correspondent à un excès d'air compris entre 100% et 130% de la valeur stoechiométrique.

La première étape de cette méthode est caractérisée en ce que l'excès d'air de combustion est réduit progressivement d'au moins 10% par rapport aux conditions standard d'air de combustion pour la conduite de ce four.

La deuxième étape de cette méthode peut être caractérisée en ce que la température atteint 1100°C au niveau du cameau.

En utilisant la méthode selon l'invention, on notera qu'une hausse de la teneur en dioxyde de soufre gazeux est observée au niveau du carneau, par rapport à ce four conduit dans des conditions standard.

### Exemple

Nous avons mené une campagne de production de 30 jours sur un four droit régénératif dont la capacité nominale est de 220 tonnes de chaux par jour, en utilisant du coke de pétrole comme combustible.

Les paramètres de conduite du four ont été progressivement adaptés au départ de valeurs standard, afin de promouvoir une forte concentration de SO2 dans le carneau de liaison.

Afin de mener cette campagne, nous avons installé les instruments et dispositifs suivants : un analyseur de gaz mesurant des gaz au niveau du carneau de liaison entre les deux cuves, des clapets automatiques sur les conduits d'amenée de l'air de refroidissement vers chaque cuve ; un analyseur de gaz à l'entrée et à la sortie du filtre à manche qui retient les particules solides dans le flux de gaz émis par le four.

Pendant toute la durée de la campagne, nous avons mesurés et pris de nombreux échantillons des flux entrants (combustible, pierres) et sortants (chaux, poussières de filtre, gaz de combustion, etc.).

Il est à noter que la production du four a été maintenue constante.

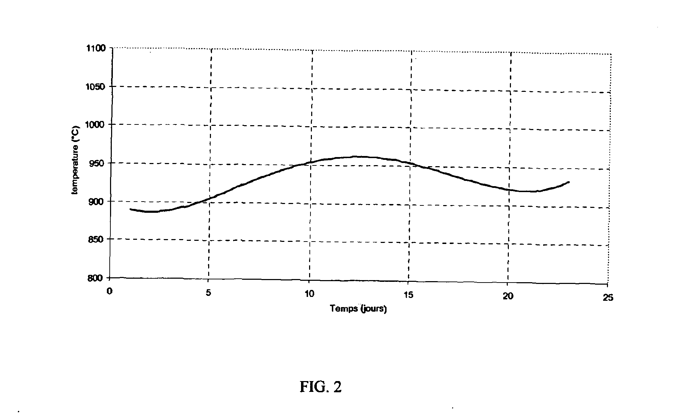

La figure 2 présente l'évolution de la température moyenne dans le carneau de liaison des cuves, au cours du temps exprimé en jour.

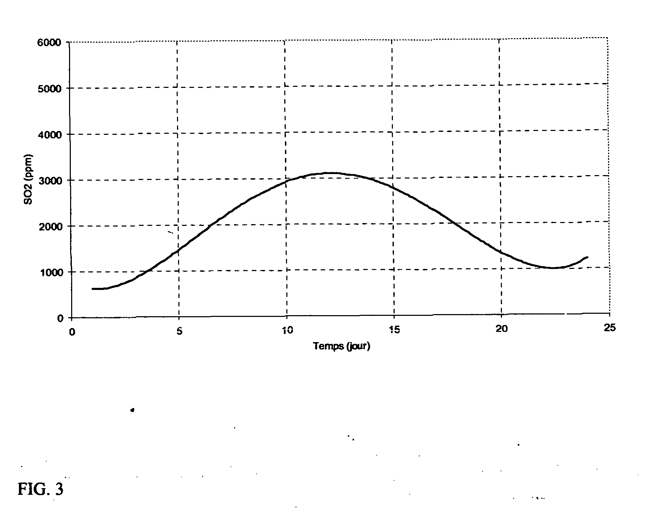

La figure 3 présente l'évolution de la concentration en S02 au même endroit, au cours du temps exprimé en jour.

La première phase (approximativement jours 1 à 6) consiste en une stabilisation du procédé dans les conditions normales. Durant cette phase, la consommation spécifique était de 3600 kJ/kg chaux et l'excès d'air standard. Cet excès d'air était de 124% par rapport aux besoins stoechiométriques de la combustion.
Comme habituellement sur les fours régénératifs, l'air de refroidissement était distribué de façon égale entre la cuve en combustion et la cuve en préchauffage.

Pendant la deuxième phase (approximativement jours 6 à 11), l'excès d'air a été réduit progressivement à 109% des besoins stoechiométriques.

Il s'en est suivi :
- une augmentation de la concentration moyenne en SO2 dans le carneau de 500 ppm à 3000 ppm ; il est à noter que pendant cette même phase, des pointes de SO2 jusqu'à des valeurs de l'ordre de 7700 ppm ont été observées ;
- une augmentation de la température moyenne du carneau de 900°C à 953°C ; au vu des caractéristiques spécifiques du réfractaire de ce four, il a été décidé de ne pas augmenter davantage la température du carneau ;
- une augmentation de la concentration moyenne en CO dans le carneau d'environ 300 ppm à environ 1200 ppm.

Comme la limite thermique du four a été atteinte à la phase précédente, une hausse jusqu'à au moins 1050°C, voire 1100°C dans le cas de revêtement encore plus réfractaire, est bien entendu exclue à la phase suivante. L'essai sera donc poursuivi en modifiant directement la répartition d'air de refroidissement.

Pendant la phase suivante (approximativement jours 11 à 16), la distribution de l'air de refroidissement est progressivement modifiée de façon à finalement ne plus injecter d'air de refroidissement dans la cuve en combustion. La température se stabilise vers 960°C au niveau du carneau, alors que le SO2 moyen dans le carneau atteint des valeurs de l'ordre de 3050 ppm.

Pendant cette phase, nous observons de façon presque systématique des pointes de SO2 jusqu'à 8000 ppm, tandis que la température de la chaux défournée reste inférieure ou égale à 150°C.

Pendant ces deux phases, la consommation spécifique du four était de l'ordre de 3600 kJ/kg de chaux produite.

D'une façon générale, du fait de la circulation des gaz dans le carneau, on peut dire que le débit en kg/h de SO2 dans le carneau a été stabilisé à des valeurs correspondant à 2 fois la quantité de soufre entrant dans le four.

Après deux semaines de fonctionnement dans ces conditions de « bas excès d'air et 100% air de refroidissement à la cuve en préchauffage », nous avons progressivement ajusté les paramètres du four afm de le remettre dans des conditions standard. La température du carneau a ainsi diminué de 35°C et le S02 dans le carneau à diminué jusqu'à atteindre des valeurs proches des valeurs de départ (500 ppm).

## Revendications

1. Méthode de production de chaux vive à partir de calcaire dans un four droit régénératif en continu, **caractérisée en ce que**, au départ de conditions standard d'excès d'air de combustion pour la conduite de ce four, elle comporte une étape où l'excès d'air de combustion est réduit progressivement jusqu'au moment où une teneur supérieure à 1000 ppm (en volume) en monoxyde de carbone est atteinte au niveau du carneau de liaison entre les cuves.

2. Méthode selon revendication 1, **caractérisée en ce que**, suite à l'étape où l'excès d'air de combustion est réduit progressivement, elle comporte une étape subséquente où la température du four est progressivement augmentée, jusqu'au moment où la température atteint au moins 1050°C au niveau du cameau.

3. Méthode selon l'une quelconque des revendications 1 ou 2, **caractérisée en ce qu'**elle comporte une étape subséquente où le volume d'air de refroidissement de la cuve en combustion est réduit progressivement, jusqu'au moment où la température de la chaux produite ne dépasse pas 150°C.

4. Méthode selon la revendication 1, **caractérisée en ce que** les conditions standard d'excès d'air de combustion pour la conduite de ce four correspondent à un excès d'air compris entre 100% et 130% de la valeur stoechiométrique.

5. Méthode selon la revendication 1, **caractérisée en ce que** l'excès d'air de combustion est réduit progressivement d'au moins de 10% par rapport aux conditions standard d'excès d'air de combustion.

6. Méthode selon la revendication 2, caractérisée en ce la température atteint 1100°C au niveau du cameau.

7. Méthode selon l'une quelconque des revendications précédentes, **caractérisée en ce qu'**elle comporte une mesure de la température au niveau du carneau.

8. Méthode selon l'une quelconque des revendications précédentes, **caractérisée en ce qu'**elle comporte une mesure de la teneur en monoxyde de carbone au niveau du carneau.

9. Méthode selon l'une quelconque des revendications précédentes, **caractérisée en ce qu'**elle comporte une mesure de la teneur en dioxyde de soufre au niveau du cameau.

10. Méthode selon l'une quelconque des revendications précédentes, **caractérisée en ce qu'**elle comporte une mesure de la teneur en oxygène au niveau du cameau.

11. Méthode selon l'une quelconque des revendications 1 à 3, **caractérisée en ce qu'**une hausse de la teneur en dioxyde de soufre gazeux est observée au niveau du carneau, par rapport à un four conduit dans des conditions standard.

12. Méthode selon l'une quelconque des revendications 1 à 3, **caractérisée en ce que** la teneur en dioxyde de soufre gazeux atteint 3000 ppm en volume au niveau du carneau.

13. Méthode selon l'une quelconque des revendications 11 ou 12, **caractérisée en ce que** le dioxyde de soufre provient du calcaire mis-en-oeuvre.

14. Méthode selon l'une quelconque des revendications 11 ou 12, **caractérisée en ce que** le dioxyde de soufre provient du combustible mis-en-oeuvre.

## Claims

1. Method for producing quick lime from lime stone in a continuous regenerative shaft kiln, **characterised in that**, starting with standard conditions of excessive combustion air for the operation of this kiln, it includes a step where the excessive combustion air is progressively reduced until a content greater than 1000 ppm (in volume) of carbon monoxide is reached in the connection flue between the tanks.

2. Method according to claim 1, **characterised in that**, following the step where the excessive combustion air is progressively reduced, it includes a subsequent step where the temperature of the kiln is progressively increased, until the temperature reaches at least 1050°C in the gas flue.

3. Method according to any of claims 1 or 2, **characterised in that** it includes a subsequent step where the volume of cooling air of the combustion tank is progressively reduced, until the temperature of the lime produced does not exceed 150°C.

4. Method according to claim 1, **characterised in that** the standard conditions of excessive combustion air for the operation of this kiln correspond to an excess of air of between 100% and 130% of the stoichiometric value.

5. Method according to claim 1, **characterised in that** the excessive combustion air is progressively reduced by at least 10% with respect to the standard conditions of excessive combustion air.

6. Method according to claim 2, **characterised in that** the temperature reaches 1100°C in the gas flue.

7. Method according to any of the previous claims, **characterised in that** it includes a measurement of the temperature in the gas flue.

8. Method according to any of the previous claims, **characterised in that** it includes a measurement of the content of carbon monoxide in the gas flue.

9. Method according to any of the previous claims, **characterised in that** it includes a measurement of the sulphur content dioxide in the gas flue.

10. Method according to any of the previous claims, **characterised in that** it includes a measurement of the oxygen content in the gas flue.

11. Method according to any of claims 1 to 3, **characterised in that** an increase in the content of gaseous sulphur dioxide is observed in the gas flue, with respect to a kiln operated in standard conditions.

12. Method according to any of claims 1 to 3, **characterised in that** the content of gaseous sulphur dioxide reaches 3000 ppm in volume in the gas flue.

13. Method according to any of claims 11 or 12, **characterised in that** the sulphur dioxide comes from the lime stone used.

14. Method according to any of claims 11 or 12, **characterised in that** the sulphur dioxide comes from the fuel used.

## Patentansprüche

1. Verfahren zur Herstellung von Branntkalk aus Kalkstein in einem kontinuierlichen Regenerativschachtofen, **dadurch gekennzeichnet, dass** es, ausgehend von standardmäßigen Bedingungen des Verbrennungsluftüberschusses für den Betrieb dieses Ofens, einen Schritt umfasst, in dem der Verbrennungsluftüberschuss fortschreitend bis zu dem Punkt reduziert wird, an dem ein Gehalt von mehr als 1000 ppm (Volumen) Kohlenmonoxid auf der Ebene des Verbindungsrauchkanals zwischen den Schächten erreicht wird.

2. Verfahren nach Anspruch 1, **dadurch gekennzeichnet, dass** es, nach dem Schritt, in dem der Verbrennungsluftüberschuss fortschreitend reduziert wird, einen anschließenden Schritt umfasst, in dem die Temperatur des Ofens fortschreitend erhöht wird, bis zu dem Augenblick, an dem die Temperatur mindestens 1050 °C auf der Ebene des Rauchkanals erreicht.

3. Verfahren nach einem der Ansprüche 1 oder 2, **dadurch gekennzeichnet, dass** es einen anschließenden Schritt umfasst, in dem das Kühlluftvolumen des Verbrennungsschafts fortschreitend reduziert wird, bis zu dem Augenblick, an dem die Temperatur des erzeugten Kalks 150 °C nicht übersteigt.

4. Verfahren nach Anspruch 1, **dadurch gekennzeichnet, dass** die standardmäßigen Bedingungen des Verbrennungsluftüberschusses für den Betrieb dieses Ofens einem Luftüberschuss entsprechen, der zwischen 100 % und 130 % des stöchiometrischen Werts liegt.

5. Verfahren nach Anspruch 1, **dadurch gekennzeichnet, dass** der Verbrennungsluftüberschuss fortschreitend um mindestens 10 % mit Bezug auf die standardmäßigen Bedingungen des Verbrennungsluftüberschusses reduziert wird.

6. Verfahren nach Anspruch 2, **dadurch gekennzeichnet, dass** die Temperatur 1100 °C auf der Ebene des Rauchkanals erreicht.

7. Verfahren nach einem der vorhergehenden Ansprüche, **dadurch gekennzeichnet, dass** es eine Messung der Temperatur auf der Ebene des Rauchkanals umfasst.

8. Verfahren nach einem der vorhergehenden Ansprüche, **dadurch gekennzeichnet, dass** es eine Messung des Kohlemonoxidgehalts auf der Ebene des Rauchkanals umfasst.

9. Verfahren nach einem der vorhergehenden Ansprüche, **dadurch gekennzeichnet, dass** es eine Messung des Schwefeldioxidgehalts auf der Ebene des Rauchkanals umfasst.

10. Verfahren nach einem der vorhergehenden Ansprüche, **dadurch gekennzeichnet, dass** es eine Messung des Sauerstoffgehalts auf der Ebene des Rauchkanals umfasst.

11. Verfahren nach einem der Ansprüche 1 bis 3, **dadurch gekennzeichnet, dass** ein Anstieg des Gehalts an gasförmigem Schwefeldioxid auf der Ebene des Rauchkanals im Vergleich zu einem Ofen beobachtet wird, der unter standardmäßigen Bedingungen betrieben wird.

12. Verfahren nach einem der Ansprüche 1 bis 3, **dadurch gekennzeichnet, dass** der Gehalt an gasförmigem Schwefeldioxid 3000 ppm Vol. auf der Ebene des Rauchkanals erreicht.

13. Verfahren nach einem der Ansprüche 11 oder 12, **dadurch gekennzeichnet, dass** das Schwefeldioxid aus dem eingesetzten Kalkstein stammt.

14. Verfahren nach einem der Ansprüche 11 oder 12, **dadurch gekennzeichnet, dass** das Schwefeldioxid aus dem eingesetzten Brennstoff stammt.
